# EUROPEAN PATENT APPLICATION

(11) **EP 4 174 312 A1**
(43) Date of publication of application: **03.05.2023**
(21) Application number: 21205942.2
(22) Date of filing: 02.11.2021
(51) Int. Cl.: F03D 7/04, F03D 13/25

(54) **YAWING A WIND TURBINE DURING IDLING**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a method of controlling an offshore wind turbine (20) subjected to a sea wave (25) for damping at least one mechanical vibration, the method comprising yawing the nacelle (21) to a favorable orientation (a) derived based on information regarding a sea wave direction (26), in order to improve damping of the vibration.

## Description

### Field of invention

The present invention relates to a method and to an arrangement of controlling an offshore wind turbine subjected to a sea wave for damping at least one mechanical vibration. Furthermore, the present invention relates to an offshore wind turbine including the arrangement and being configured to perform the method.

### Art Background

Offshore wind turbines are subjected to sea waves and wind which may excite one or more mechanical oscillations of one or more parts of the wind turbine. In particular, larger offshore turbines support structures (such as monopile and tower) may be driven by idling (wave generated) fatigue loads to a substantial percentage. For the idling fatigue loads, the damping of the system (soil, structure, aerodynamic) is of fundamental importance. The fatigue load experienced by the wind turbine and/or support structure (such as platform or fixed foundation) may also depend on the height of the support structure and/or the height of the tower for example.

The document US 2018/0347542 A1 discloses a system and method for reducing loads during an idling or parked state of a wind turbine via yaw offset away from an incoming wind direction. Thereby, a rotor blade of the wind turbine is monitored for faults and if a fault is detected, the operational status of the wind turbine is determined. If in a predetermined operational status, the nacelle is actively yawed away from an incoming wind direction until either the fault is corrected or cleared and/or the operational status changes.

It has, however, been observed that conventional methods and systems do not in all circumstances achieve sufficient damping of mechanical oscillations during operation, in particular during idling.

Thus, there may be a need for a method and a corresponding arrangement of controlling an offshore wind turbine subjected to a sea wave for damping at least one mechanical vibration, wherein load acting on the wind turbine components and/or support structure may be reduced and wherein in particular mechanical vibrations may effectively be damped.

### Summary of the Invention

This need may be met by the subject matter according to the independent claims. Advantageous embodiments of the present invention are described by the dependent claims.

According to an embodiment of the present invention it is provided a method of controlling an offshore wind turbine subjected to a sea wave for damping at least one mechanical vibration, the method comprising: yawing the nacelle to a favorable orientation derived based on information regarding a sea wave direction, in order to improve damping of the vibration.

The method may for example be performed by a wind turbine controller or a unit or a module of a wind turbine controller. The offshore wind turbine includes a nacelle mounted on top of a wind turbine tower which is mounted at a wind turbine support structure. The wind turbine support structure may for example be a floating platform floating on the sea or may include a fixed foundation which is fixed at a sea ground.

The method may be adapted to damp at least one mechanical vibration of for example a system comprised of the nacelle including the rotor blades, the wind turbine tower and the support structure. The entire wind turbine system may be excited by at least one sea wave to the mechanical vibration. The method may be employed for damping one or more modes of one or more mechanical vibrations of one or more components or one or more groups of components of the wind turbine.

For yawing the nacelle, i.e. setting the orientation of the nacelle and thereby setting the orientation of the rotor at which the plural rotor blades are connected, the nacelle is rotated or turned substantially around a vertically oriented yawing axis which substantially coincides with a longitudinal direction of the wind turbine tower.

The favorable orientation of the nacelle may be considered as an orientation (or yawing angle) of the nacelle at which the vibration is effectively damped, in particular damped to a maximal degree for the current operating conditions, including in particular the sea wave direction.

The sea wave direction may correspond to the direction of a largest or main wave to which the wind turbine is subjected or to which the support structure at which the wind turbine is supported is subjected to. The sea wave direction may be defined as a direction of propagation of a wave front of the sea wave. According to embodiments of the present invention, the sea wave direction not necessarily needs to be determined as an actual value but may have previously been determined for example as a long term (average or mean) expected or observed sea wave direction, which may depend on the location at which the wind turbine or the support structure is located and/or may depend on an annual season. In other embodiments, the sea wave direction may be determined, for example using measurements, as an actually prevailing sea wave direction the wind turbine is subjected to.

According to embodiments of the present invention, the favorable orientation may be a predetermined favorable orientation which may, however, depend on the location of the wind turbine and/or for example the annual season and/or even on local weather conditions or weather forecasts.

The information regarding the sea wave direction may thus originate from one or more measurement values of one or more sensors installed at the wind turbine. In other embodiments, the information regarding the sea wave direction may be obtained from an electronic storage or for example look-up table, in which the expected or long term sea wave direction is stored or in which directly the predetermined favorable orientation of the nacelle is stored, which, however, may have been previously be determined respecting the long term or expected sea wave direction.

According to one embodiment of the present invention, the favorable orientation may correspond to an orientation of the nacelle in which the rotor axis and the sea wave direction include substantially an angle between 60° and 120°, in particular substantially 90°.

The favorable orientation of the nacelle may be determined, considering the sea wave direction, from simulations of the mechanical system including at least the nacelle, the wind turbine tower and/or the wind turbine support structure. When the sea wave direction is considered for deriving the favorable orientation, the damping of the vibration may be improved compared to conventional prior art.

According to an embodiment of the present invention, the favorable orientation is derived further based on information regarding a main (in particular fatigue) loading direction.

The main loading direction may be a preknown or predetermined main loading direction which may have been determined earlier from long term measurements or estimations and/or simulations, in particular based on environmental conditions (wind and/or wave). In other embodiments, the main loading direction may correspond to an actual main loading direction which may for example be determined using one or more measurements using one or more sensors installed at different locations of the wind turbine system.

According to embodiments of the present invention the main loading direction may mean a "Long term main fatigue loading direction", meaning the sector or direction for which the highest fatigue load is expected or observed.

According to embodiments of the present invention the main loading direction may mean a "instantaneous/short term main (fatigue) loading direction"; this would be the load direction of maximum loading in a shorter timeframe as e.g. measured on the turbine.

According to embodiments of the present invention, the main loading direction may substantially be equal or may only deviate not much from the sea wave direction or may deviate by an angle less than 30° or 20° or 10° from the sea wave direction. According to other embodiments, the main loading direction may be derivable from the sea wave direction and a wind direction. According to other embodiments of the present invention, the sea wave direction may be determined from the main loading direction, which may be accessible or which may be derivable from one or more measurements of sensors, such as accelerometers, strain sensors or the like.

When also the information regarding the main loading direction is included for deriving the favorable orientation, the favorable orientation may still be improved regarding achieving an improved damping of the vibration.

According to an embodiment of the present invention, the method further comprises defining the favorable orientation using a predetermined angle range relative to the sea wave direction and/or the main loading direction.

According to this embodiment, the favorable orientation of the nacelle is achieved, when the nacelle is oriented into the predetermined angle range (e.g. relative to the sea direction). Thereby, flexibility may be improved. Furthermore, the method may be simplified. The predetermined angle range may be adapted according to the particular application, in particular considering the wind turbine design, wind turbine mechanical layout and/or the magnitude or amplitude of the sea wave.

According to an embodiment of the present invention, the favorable orientation may not depend on a wind direction, but may merely depend on the main sea wave direction and/or the main loading direction.

According to an embodiment of the present invention, the nacelle is set into the favorable orientation when an angle between the rotation axis of the rotor and the sea wave direction and/or the main loading direction is within the predetermined angle range.

Thereby, the method may be simplified. At the rotor, plural rotor blades are mounted. The rotor is harbored within the nacelle and is rotating, in order to drive a generator for producing electrical energy. However, in particular, the method may be applied, when the rotor is standing still or is rotating only very slowly, in an idling state.

The favorable orientation is not necessarily defined with respect to the rotor axis, but may also be defined with respect for example to a rotor plane in which the rotor blades are rotating. The rotor plane is substantially perpendicular to the rotor axis. Depending relative to which direction, i.e. the rotor axis or the direction defined by the rotor plane, is defined, the predetermined angle range may be adapted.

According to an embodiment of the present invention, the predetermined angle range spans between 60° and 120°, in particular between 80° and 100°, or a negative of the preceding ranges (when the favorable orientation is defined with respect to the rotor axis).

The exact span of the angle range may be determined based on simulations simulating the mechanical system including the nacelle, the tower and the support structure. A most favorable orientation may be considered as an orientation of the nacelle, wherein damping of the mechanical vibration is maximized. The most favorable orientation may for example correspond to an orientation of the nacelle, wherein the rotor axis includes an angle of 90° with the main sea wave direction.

According to an embodiment of the present invention, the sea wave direction is based on a predetermined long term, in particular season and/or location dependent, wave direction and/or a long term main loading direction.

For example, over a long time range, the sea waves occurring at the site of installation of the wind turbine system may have been observed and monitored regarding their directions. The long term direction may then for example correspond to an average wave direction averaged over the observed wave directions across the prolonged time range. According to other embodiments, the predetermined long term wave direction may depend on the season, in particular annual season, or may depend on known or predetermined environmental phases in which the sea wave directions have particular properties. When the sea wave direction is based on a predetermined long term wave direction, measurements for determining an actual sea wave direction may not be necessary, thereby simplifying the method.

According to an embodiment of the present invention, the main (in particular fatigue) loading direction is based on a predetermined long term, in particular season and/or location dependent, main (in particular fatigue) loading direction.

The main fatigue load direction may be the compass direction in which the long term fatigue loading is highest. E.g. the fatigue loading for several compass directions may be determined or calculated and the support structure may be designed for the highest fatigue load, which is associated with a certain compass direction.

The main loading direction may for example have previously been determined based on previous load measurements performed by sensors installed at the wind turbine for example. In other embodiments, the main loading direction may be derived from for example the predetermined long term wave direction, potentially also including wind direction information. Thereby, during actual performing of the method, further measurement values may not be required.

According to an embodiment of the present invention, the sea wave direction and/or the main loading direction is based on an actual sea wave direction and/or an actual main loading direction.

The actual sea wave direction and/or the actual main loading direction may be the respective directions which are actually present when performing the method. When the respective actual sea wave direction and actual main loading direction are considered, the method may be improved, since the actual sea wave direction and/or actual main loading direction may not in all circumstances be equal or correspond to a long term wave direction or a long term main loading direction. For determining the actual sea wave direction and/or actual main loading direction, measurements and/or processing steps may be required.

According to an embodiment of the present invention, the method further comprises obtaining the actual sea wave direction and/or the actual main loading direction using at least one sensor including at least one of: at least one accelerometer; at least one strain sensor; at least one strain gauge; at least one other load measuring device, wherein the sensor is located in or at at least one of: a tower top, a tower bottom, the nacelle, any other part of the wind turbine.

Some or all of the sensors may conventionally be installed at the wind turbine system, in particular for measuring strain and/or load of mechanical components. The sensor may for example be adapted for determining strain and/or bending and/or acceleration of one or more portions of the wind turbine system. The respective sensor or sensors may be adapted to in particular determine direction of acceleration and/or strain and/or load which direction may correspond to the direction of the actual sea wave direction and/or the actual main loading direction.

Measurement signals from the sensors may be processed and in particular combined, in order to derive the actual sea wave direction and/or the actual main loading direction. Thereby, in particular the structural layout, expected vibration modes and also operational state of the wind turbine may be considered. Thereby, the actual sea wave direction and/or the actual main loading direction may accurately be determined.

According to an embodiment of the present invention, the wave direction comprises or is derived based on main loading direction and/or the wind direction.

The wave direction may not directly be measurable. However, using the main loading direction and in further embodiments also the wind direction, may enable to determine the wave direction, in particular an actual sea wave direction in an accurate manner.

According to an embodiment of the present invention, the method is performed, while the wind turbine is idling, idling including at least one of: no electrical power is produced by the wind turbine and/or output to the grid; the wind turbine is electrically disconnected from the grid; at least one rotor blade is pitched to reduce, in particular minimize, lift, further in particular pitched to feather; pitched such that the effective chord is aligned to out-of-rotor plane; a rotation of the rotor is stopped or is negligible, in particular less than 5% of nominal rotational speed; active speed control of the rotor is not possible or is not performed; a rotor shaft brake is applied or is not applied; the wind turbine is in a state after completion of construction before grid connection.

In particular, the wind turbine may not harvest wind energy and may not convert the wind energy to electrical energy. It has been observed, that a substantive percentage of the fatigue load occurs during idling of the wind turbines. Thereby, when the method is performed during idling, fatigue load of wind turbine components may effectively be reduced.

According to an embodiment of the present invention, the vibration includes a vibration of at least one of: a tower; a fixed foundation; a floating platform; a support structure; a monopile; a tower-foundation system; a tower-floating platform system; and/or the offshore wind turbine is a fixed foundation wind turbine or a floating wind turbine, and/or the method further comprising: obtaining wind turbine operational state information, wherein the favorable orientation is derived further based on the wind turbine operational state.

Thereby, the method may effectively damp vibrations of a plurality of wind turbine components or portions. The fixed foundation may comprise a monopile or a multiple piles. The floating wind turbine may comprise a platform floating on the sea at which the wind turbine tower is erected. The floating platform may be loosely connected to the sea ground using plural ropes or wires. Thereby, a flexibility is provided.

When also the operational state information of the wind turbine is considered for deriving the favorable orientation, the vibration damping may further be increased. For example, the favorable orientation may be derived also based on whether the rotor is completely stopped or is rotating slowly. Further, the favorable orientation may be derived on whether the one or more rotor blades is pitched to around 90° or pitched to other pitch angles. The favorable orientation may e.g. taken from a look up table comprising a highest damping orientation for plural operational conditions including different wave directions.

It should be understood, that features, individually or in any combination, description, disclosed, applied or explained with respect to a method of controlling an offshore wind turbine subjected to a sea wave, are also, individually or in any combination, applicable to a corresponding arrangement for controlling an offshore wind turbine subjected to a sea wave, according to embodiments of the present invention and vice versa.

According to an embodiment of the present invention it is provided an arrangement for controlling an offshore wind turbine subjected to a sea wave for damping at least one mechanical vibration, the arrangement comprising: a processor adapted to derive a favorable orientation based on information regarding a sea wave direction; an actuator adapted to yaw the nacelle to the favorable orientation, in order to improve damping of the vibration.

The arrangement may be implemented in software and/or hardware and/or may be a part of a wind turbine controller or may be part or may be a module of a wind turbine controller for example. The arrangement may be configured to carry out the method of controlling the offshore wind turbine as described in plural embodiments above.

According to an embodiment of the present invention it is provided an offshore wind turbine, including: a tower mounted at a support structure; an arrangement according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 illustrates a pie chart regarding fatigue damage contribution of a wind turbine;
Fig. 2 illustrates a graph regarding idling damage contribution to fatigue load;
Figs. 3 and 4 illustrate nacelle orientations as adopted according to embodiments of the present invention e.g. during wind turbine idling;
Fig. 5 illustrates a graph of fatigue load depending on yaw angle relative to an incoming sea wave;
Figs. 6 and 7 illustrate nacelle orientations as adopted by conventional methods;
Fig. 8 illustrates a method scheme according to an embodiment of the present invention.

### Detailed Description

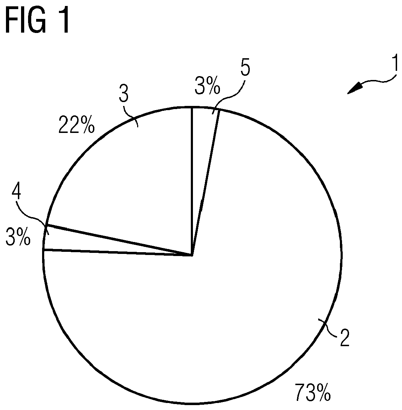

**Fig.** 1 illustrates a pie chart illustrating the damage contribution to fatigue load in different operational conditions. The contribution 2 in the pie chart 1 corresponds to the contribution to the total fatigue load during idling of the wind turbine. It can be appreciated that a significant part of the turbine fatigue load comes from the idling state of the wind turbine, such as about 70% of the turbine fatigue load (that can vary significantly for different sites, support structures,..) may come from the idling state of the wind turbine. The contributions 3 and 4 correspond to other operating states, such as normal operating state 4 or an operating state 3 where there is especially high wind speed present. The contribution 2 represents the parked no-grid condition in which the wind turbine is parked and is electrically disconnected from the utility grid. The portion 5 corresponds to other operational states of the wind turbine.

It can be appreciated from Fig. 1 that the offshore wind turbine support structures are driven by idling fatigue loads to a substantial percentage. For the idling fatigue loads, the damping of the system (soil, structure, aerodynamic) may be of fundamental importance. Embodiments of the present invention address the improvement of damping during the idling state of the wind turbine. When the vibrations of the wind turbine are damped during idling, the fatigue loads of the wind turbine may therefore substantially be reduced.

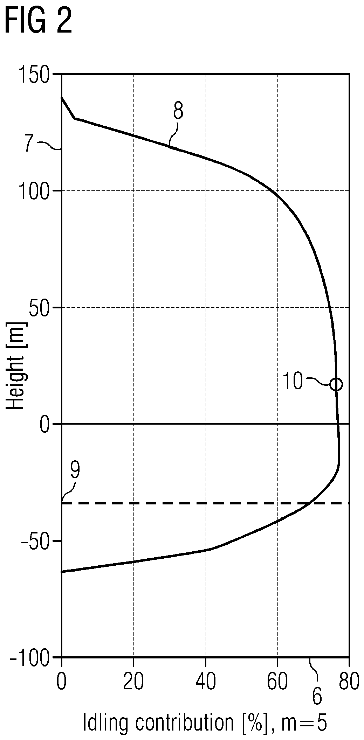

**Fig.** 2 illustrates a curve 8 in a coordinate system having an abscissa 6 indicating the idling damage contribution relative to the total fatigue damage and having an ordinate 7 indicating the height of the support structure at which the wind turbine tower of the wind turbine is erected. Thus, the curve 8 indicates the fatigue damage contribution over the height of the support structure. It can be appreciated that the fatigue load contribution is high, in sections of the wind turbine above the mud line which is indicated at a horizontal line 9 and up the a height of around 75 m. The point 10 corresponds to the interface position, i.e. to the position of the sea surface. From Fig. 2 it can be seen that for the design-critical interface and mud line locations 9, 10, high amount of the fatigue damage originates from the idling operational state. Thus, addressing the idling operational state for reducing mechanical oscillations may contribute to a considerable extent to reducing fatigue loads the wind turbine is subjected to.

Conventionally, for damping tower vibrations, active or passive dampers, active idling or adding more steel to the structure is applied, in order to increase the stiffness. Active idling is defined herein as idling at a suitable rotor speed using active yaw and active pitch control, such that sufficient aerodynamic damping is achieved.

However, these measures do not fully address the problems and the support structure design may still be dominated by the idling cases. The design of the tower and monopile to withstand these loads may have a strong impact on the economic viability of the project.

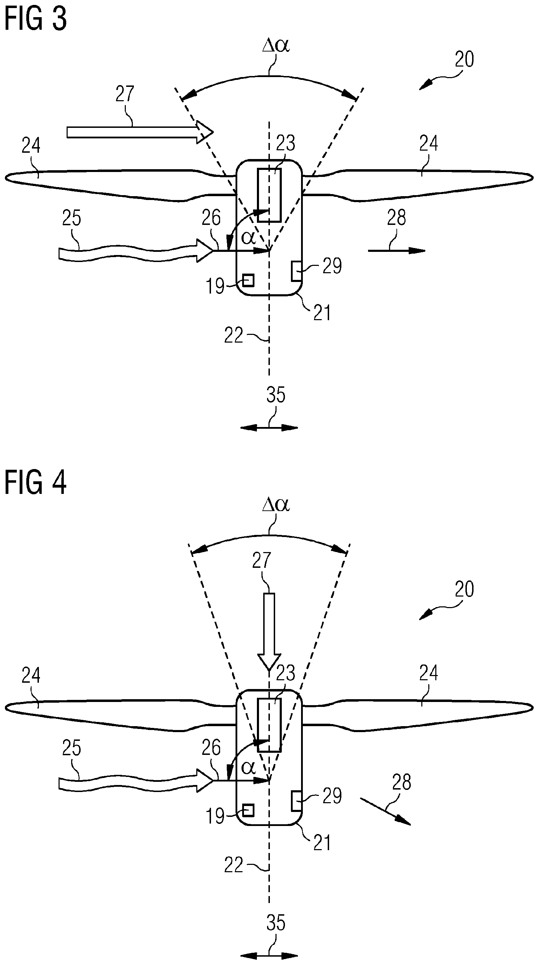

**Figs. 3 and** 4 schematically illustrate orientational settings of the wind turbine, in particular nacelle, during idling according to embodiments of the present invention. In Figs. 3 and 4, the wind turbine 20 is viewed from above approximately viewing along the wind turbine tower longitudinal direction. The wind turbine 20 comprises a nacelle 21 in which a rotor 23 is rotatably supported, wherein the rotor 23 has a rotor axis 22. At the rotor 23, plural rotor blades 24 are connected.

The wind turbine 20 illustrated in Figs. 3 and 4 are both in an idling operational state, in which they in particular do not harvest wind energy and do not produce electrical energy. The rotor 23 may stand still or may rotate only very slowly.

The curved line 25 symbolizes a sea wave having a sea wave direction 26. The arrow 27 denotes the wind direction.

According to embodiments of the present invention, the nacelle is set into a favorable orientation which is derived based on information regarding the sea wave direction 26 in order to improve damping of the vibration. A vibration of the wind turbine system may be excited to include oscillatory movement indicated with double arrow 35, in particular substantially parallel to the sea wave direction 26 or main loading direction 28.

Thereby, the sea wave direction 26 may substantially correspond to a main loading direction 28 or may be slightly different from a main loading direction 28.

In Fig. 3, the wind direction 27 is substantially equal (parallel) to the sea wave direction 26. In this case, also the main loading direction 28 substantially corresponds or is equal to the sea wave direction 26 as well as the wind direction 27. The main loading direction 28 may indicate the long term main fatigue loading direction or an instantaneous/short term main (fatigue) loading direction. In particular the long term main fatigue loading direction may be used to derive the favorable orientation.

In Fig. 4, the wave direction 26 is substantially perpendicular to the wind direction 27. In the situation illustrated in Fig. 4, the main loading direction 27 is different from the sea wave direction 26 as well as different from the wind direction 27.

The sea wave direction 26 may for example be derived based on the main loading direction 28. For determining the main loading direction 28, one or more sensors 29 may be provided at one or more locations at the wind turbine, in particular at a tower top, at a tower bottom and so forth. The sensor 29 may for example comprise an accelerometer and/or a strain sensor and/or a strain gauge. The one or more sensors 29 may be capable of measuring or determining the main loading direction 28. In other embodiments, the sensors 29 may be capable of directly determining the sea wave direction 26.

In Figs. 3 and 4, a predetermined angle range Δα is indicated defining possible different orientations of the nacelle when in the favorable orientation. To be in the favorable orientation, the rotor axis 22 may be set within the angle range Δα. In the illustration of Fig. 3, the angle between the sea wave direction 26 and the rotor axis 22 is α=90°. The angle α may, however, be also in the range Δα, e.g. between 60° and 120° (or the negative), thus for all orientations of the nacelle, when the rotor axis 22 is within the predetermined angle range Δα. In Fig. 4 the angle range Δα spans between 70° and 110°, as set depending on the particular application.

The wave direction 26 may be determined based on measurements to obtain an actual sea wave direction or may have been determined based on long term monitorings of wave directions. Similarly, the main loading direction 28 may also be determined as an actual main loading direction or may be a long term main loading direction which may have been previously determined.

In Fig. 4, the favorable orientation of the nacelle 21 corresponds again to orientations of the nacelle, wherein the rotor axis 22 includes an angle with the sea wave direction 26 within the predetermined angle range Δα. The predetermined angle range may be determined based on the particular application, in particular involving simulations of damping behavior.

According to embodiments of the present invention the favorable orientation does not depend on the wind direction 27, as can be appreciated from Figs. 3 and 4 wherein the angle α between the rotor axis 22 and the sea wave direction 26 depends or is set based on the sea wave direction, but not on the wind direction 27. In particular the angle α between the rotor axis 22 and the sea wave direction 26 may be set to the same value for different wind directions, in order to adopt the favorable orientation.

For the configurations illustrated in Fig. 3 and 4, the aerodynamic damping is relatively high for effectively damping mechanical oscillations. In Fig. 3, the yaw error is 90 deg, implying that aerodynamic effects are drag-dominated. With relatively high wind speeds, damping of around 4% can be achieved. Rotor rotation has an insignificant impact on the damping. In Fig. 4, the yaw error is zero and aerodynamic effects causing rotor rotation are lift-dominated. With relatively high wind speeds, the highest aerodynamic damping of around 7% can be achieved.

The wind turbine 20 illustrated in Figs. 3 and 4 in different environmental conditions includes an arrangement 19 for controlling the offshore wind turbine 20 for damping at least one mechanical vibration according to an embodiment of the present invention. The arrangement 19 includes a not in particular illustrated processor which is adapted to derive the favorable orientation α based on information regarding a sea wave direction 26. Furthermore, the arrangement 29 comprises an actuator adapted to yaw the nacelle 21 to the favorable orientation, in order to improve damping of the vibration. The arrangement 19 is in particular configured to carry out a method according to an embodiment of the present invention.

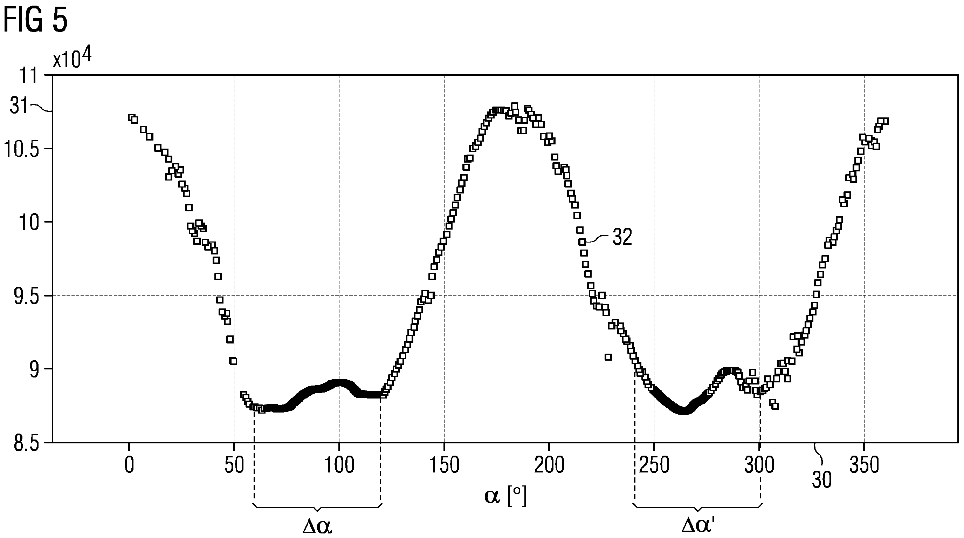

**Fig.** 5 illustrates in a curve 32 in a coordinate system having an abscissa 30 indicating the angle α relative to the sea wave direction and having an ordinate 31 indicating the fatigue load. The curve 32 indicates how the fatigue load changes with the angle α relative to the sea wave direction as is defined in Figs. 3 and 4. The curve 32 has been obtained by performing simulations, simulating the mechanical system of the wind turbine system including the nacelle, the tower and the wind turbine support structure.

As can be appreciated from the curve 32, the fatigue loads can largely be reduced by yawing 60° to 120° or negative towards the wave direction 26. In particular, the predetermined angle range Δα is also indicated in Fig. 5 being defined to be between 60° and 120°. In this predetermined angle range Δα, the fatigue load is considerably smaller than for other nacelle orientations. The angle range Δα' being between 240° and 300° corresponds to the negative of the predetermined angle range Δα (derived by 360° - Δα). When a predetermined angle range is defined for defining the favorable orientation, a larger range of yaw positions relative to the sea wave direction is possible.

Embodiments of the present invention may reduce vibrations by utilizing a yaw strategy that maximizes the aerodynamic damping and thereby reduces vibrations during idling.

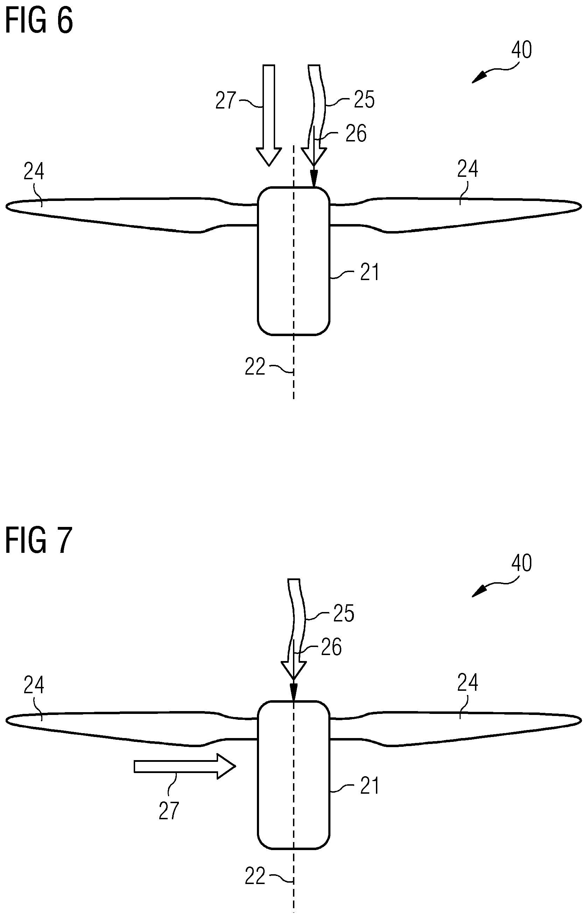

**Figs. 6 and** 7 illustrate wind turbines 40 which are operated according to conventional methods. Therein, the rotor axis 22 is oriented to be substantially parallel to the sea wave direction 26. Thereby, conventionally, however, a very low aerodynamic damping is achieved.

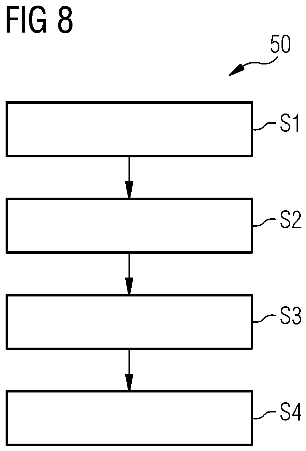

Fig. 8 illustrates a method scheme 50 according to an embodiment of the present invention. In a method step 51, the turbine operational state is determined based on internal controller states. In a next method step 52, the wave direction is determined based on either a direct measurement of wave properties or a suitable proxy, like tower bottom load direction measurement. In a next method step 53, if in a normal production state, in energy harvesting or if active speed control during idling are possible, the controller state is switched accordingly to one of these states to maximize power damping. In a further method step 54, if active speed control is not possible, the turbine is yawed 90° to the wave direction, in order to maximize tower damping. Therein, the shaft brake may be applied to inhibit rotor rotation.

According to other embodiments of the present invention, one or more steps as illustrated in Fig. 8 may be discarded.

According to an embodiment of the present invention, the turbine may be yawed to the favorable orientation or position towards an a priori determined main wave direction, for example from long term wave measurements.

Further, according to an embodiment of the present invention, the turbine may be yawed to a favorable position or orientation towards a main loading direction, measured by accelerometers, strain gauges or other load (proxy) measuring devices located in the tower, the nacelle or in any part of the turbine structure.

According to an embodiment of the present invention, the wind turbine may be yawed to a favorable position or orientation towards an a priori determined main wave direction after completion of construction to minimize loads before grid connection.

In a further embodiment of the present invention, the control strategy may be used for floating wind turbines or fixed foundation wind turbines for example.

Embodiments of the present invention use the fact that the aerodynamic damping may be different depending on the orientation of the nacelle relative to the wave direction.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling an offshore wind turbine (20) subjected to a sea wave (25) for damping at least one mechanical vibration, the method comprising:
yawing a nacelle (21) of the wind turbine to a favorable orientation (α) derived based on information regarding a sea wave direction (26), in order to improve damping of the vibration.

2. Method according to the preceding claim, wherein the favorable orientation (α) is derived further based on information regarding a main loading direction (28), in particular long term main loading direction or actual main loading direction.

3. Method according to one of the preceding claims, further comprising:
defining the favorable orientation (α) using a predetermined angle range (Δα) relative to the sea wave direction (26) and/or the main loading direction (28).

4. Method according to one of the preceding claims, wherein the nacelle (21) is set into the favorable orientation when an angle (α) between the rotation axis (22) of the rotor and the sea wave direction (26) and/or the main loading direction (28) is within the predetermined angle range (Δα).

5. Method according to one of the preceding claims, wherein the predetermined angle range (Δα) spans between 60° and 120°, in particular between 80° and 100°, or a negative of the preceding ranges.

6. Method according to one of the preceding claims, wherein the sea wave direction (26) is based on a predetermined long term, in particular season and/or location dependent, wave direction and/or a long term main loading direction.

7. Method according to one of the preceding claims, wherein the main loading direction (28) is based on a predetermined long term, in particular season and/or location dependent, main loading direction.

8. Method according to one of the preceding claims, wherein the sea wave direction (26) and/or the main loading direction (28) is based on an actual sea wave direction and/or an actual main loading direction.

9. Method according to one of the preceding claims, further comprising obtaining the actual sea wave direction (26) and/or the actual main loading direction (28) using at least one sensor (29) including at least one of:
at least one accelerometer;
at least one strain sensor;
at least one strain gauge;
at least one other load measuring device, wherein the sensor is located in or at at least one of:
a tower top, a tower bottom, the nacelle, any other part of the wind turbine.

10. Method according to the preceding claim, wherein the sea wave direction (26) comprises or is derived based on main loading direction (28) and/or the wind direction (27).

11. Method according to one of the preceding claims, wherein the method is performed, while the wind turbine (20) is idling, idling including at least one of:
no electrical power is produced by the wind turbine and/or output to the grid;
the wind turbine is electrically disconnected from the grid;
at least one rotor blade is pitched to reduce, in particular minimize, lift, further in particular pitched to feather;
a rotation of the rotor (23) is stopped or is rotating less than 5% or nominal speed;
active speed control of the rotor (23) is not possible or is not performed;
a rotor shaft brake is applied or is not applied;
the wind turbine (20) is in a state after completion of construction before grid connection.

12. Method according to one of the preceding claims,
wherein the vibration includes a vibration of at least one of:
a tower;
a fixed foundation;
a floating platform;
a support structure;
a monopile;
a tower-foundation system;
a tower-floating platform system; and/or
the offshore wind turbine (20) is a fixed foundation wind turbine or a floating wind turbine, and/or
the method further comprising:
obtaining wind turbine operational state information,
wherein the favorable orientation is derived further based on the wind turbine operational state.

13. Arrangement (19) for controlling an offshore wind turbine subjected to a sea wave for damping at least one mechanical vibration, the arrangement comprising:
a processor adapted to derive a favorable orientation based on information regarding a sea wave direction;
an actuator adapted to yaw the nacelle to the favorable orientation, in order to improve damping of the vibration.

14. Offshore wind turbine (20), including:
a tower mounted at a support structure;
an arrangement (19) according to the preceding claim.
